# EUROPEAN PATENT SPECIFICATION

(11) **EP 2 169 931 B1**
(45) Date of publication and mention of the grant of the patent: **09.08.2017**
(21) Application number: 08105423.1
(22) Date of filing: 24.09.2008
(51) Int. Cl.: H04B 3/32, H04M 11/06

(54) **Method and device for data processing and communication system comprising such device**
Verfahren und Vorrichtung zur Datenverarbeitung und Kommunikationssystem mit einer derartigen Vorrichtung
Procédé et dispositif de traitement de données et système de communication comprenant un tel dispositif

(43) Date of publication of application: 31.03.2010
(73) Proprietor: ADTRAN GmbH, 10557 Berlin (DE)
(72) Inventor: Ahrndt, Thomas, 85521 Ottobrunn (DE); Gernegross, Dietmar, 82041 Oberhaching (DE)
(74) Representative: Brachmann, Roland W.

(56) References cited:
- EP-A- 1 845 629
- US-A1- 2007 230 548
- US-A1- 2008 084 950

## Description

The invention relates to a method and to a device for data processing and to a communication system comprising such a device.

DSL or xDSL, is a family of technologies, comprising in particular ADSL, ADSL2, ADSL2+, VDSL, VDSL2, that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

An example of an ADSL system is disclosed in European Patent Application EP1845629A1. According to this document the power used for the ADSL connection can be adjusted during the transmission process.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices (COs), from fiber-fed cabinets preferably located near the customer premises, or within buildings.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

The xDSL wide band modulation approaches are susceptible regarding crosstalk interference that is introduced to the twisted pair transmission line and received by the modem. Methods to mitigate such interferences are disclosed in the US Patent Application Publications US2008/0084950A1 and US2007/0230548A1, for example.

Crosstalk occurs when wires are coupled, in particular between wire pairs of the same or a nearby bundle that are used for different signal transmission. Hence, data signals from one or more sources can be superimposed on and contaminate a data signal. The crosstalk comprises a near-end crosstalk (NEXT) and a far-end crosstalk (FEXT).

Based on such crosstalk, data signals transmitted over twisted-pair lines can be considerably degraded by the crosstalk interference generated on one or more adjacent twisted-pair phone line in the same and/or a nearby multi-core cable or bundle. With an increasing transmission speed, this situation even deteriorates, which may significantly limit a maximum data rate to be transmitted via a single line.

Furthermore, idle data sent induce crosstalk interference and hence disturb user data sent via other lines of, e.g., a multi-core cable. As there are typically 50 lines within one multi-core cable, such crosstalk could significantly impair the overall performance of the transmitting capability.

xDSL in particular utilizes Discrete Multi-Tone (DMT) modulation. The signal to be transmitted is obtained by an Inverse Fourier Transform of the frequency signal, which is constituted from a set of QAM symbols to be transmitted. Each so called DMT symbol may comprise of a plurality of QAM symbol which are organized as subcarriers of a width of 4,3125 kHz or 8,625 kHz.

A noise interference on each line (xDSL) varies with a number of currently active DSL users. Thus, due to the dynamic of the DSL users, crosstalk between individual DSL lines is always a snapshot.

Whenever a DSL (e.g., ADSL or VDSL) is activated, loop conditions are measured during a training phase. The training reveals a Quiet Line Noise per sub-carrier (QLNps) at the receiver input. It allows calculating a Signal-to-Noise Ratio (SNRps) for each sub-carrier. Due to the snapshot scenario, changing loop conditions and noise interference are taken into account by providing a margin as a reserve for calculating the bits. Said margin can be loaded on each sub-carrier.

This margin is normally a flat margin, i.e. a given value for all sub-carriers based on the disturbing noise during the training phase.

However, in real life crosstalk varies also over frequency as well as over time. It also depends on an actual DSL technology or loop topology. Due to real crosstalk induced by other lines (xDSL), a re-training may become necessary for each (heavily) disturbed line. Triggering of such re-training depends on the size of said margin. Also, re-training interrupts data traffic which is perceived on higher layers. Such interruptions need to be avoided.

The problem to be solved is to overcome the disadvantages stated above and in particular to improve the data processing over xDSL by significantly reducing the risk for re-training due to interference and/or crosstalk without spending a high flat margin and therefore loosing performance.

This problem is solved according to the features of the independent claims. Further embodiments result from the depending claims.

In order to overcome this problem, a method is provided for data processing wherein a first network element conveys data towards a second network element at at least one frequency at a reduced transmission power.

Said reduced transmission power can be predetermined, configured or calculated (e.g., in real-time). The transmission power may, e.g., be calculated based on transmission values that could be obtained by a previous training phase. It is also an option that said transmission power is determined for all, a group of or particular frequencies.

Advantageously, the second network element (e.g., a user device or a Customer Premises Equipment) does not have to be informed about such reduced transmission power. As an option, the second network element may be informed by a message or notification, e.g., via a separate overhead channel, about the reduced transmission power.

The transmission power used for the data conveyed via said at least one frequency is reduced compared to a nominal or reported transmission power (feigned) of at least one other frequency.

Hence, instead of adding noise to the at least one frequency, the transmission power is reduced thereby allowing the second network element a standard processing based on the attenuated signal received.

Advantageously the second network element is not aware of the fact that the first network element reduces the transmission power and hence such information is not provided via any kind of signaling (in-band or out-band). As an alternative, such information may be provided to the second network element and it may further be detected and thus considered to be discarded by the second network element, i.e., the second network element may deliberately adjust to the signal (as if it were not attenuated) to increase its margin for heavily disturbed signals or high interference scenarios.

In an embodiment, said data processing is a DMT data processing via at least one digital subscriber line.

In particular, various kinds of digital subscriber lines ("xDSL") can be utilized with the approach provided herein.

In another embodiment, the first network element is or is associated with a Digital Subscriber Line Access Multiplexer and/or a Central Office.

In a further embodiment, the second network element is or is associated with a Customer Premises Equipment, in particular a digital subscriber line modem.

The second network element may in particular deployed with, near or at a customer's premises.

In a next embodiment, the second network element determines a signal-to-noise ratio (SNR) based on the data conveyed.

Such data may comprise signals that are processed at the second network element in order to determine the SNR.

It is also an embodiment that the first network element adds noise to data to be conveyed for at least one frequency.

In addition to reducing the transmission power, the first network element may also add noise to the at least one frequency.

Pursuant to another embodiment, the data is conveyed towards the second network element during a startup-phase and/or during a training-phase of the second network element.

Such startup-phase comprises a training of a modem at or being associated with the second network element.

According to an embodiment, the first network element coordinates several startup-phases and/or training-phases with several second network elements.

Hence, the first network element can utilize and/or assign (indirectly) frequencies to lower transmission rates for several trainings of several modems. The first network element may in particular utilize such startup-phases and/or training-phases according to lines that interfere with each other, in particular lines of a single cable binder.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a central office or digital subscriber line access multiplexer.

The problem stated supra is further solved by a communication system comprising the device as described herein.

Embodiments of the invention are shown and illustrated in the following figure:

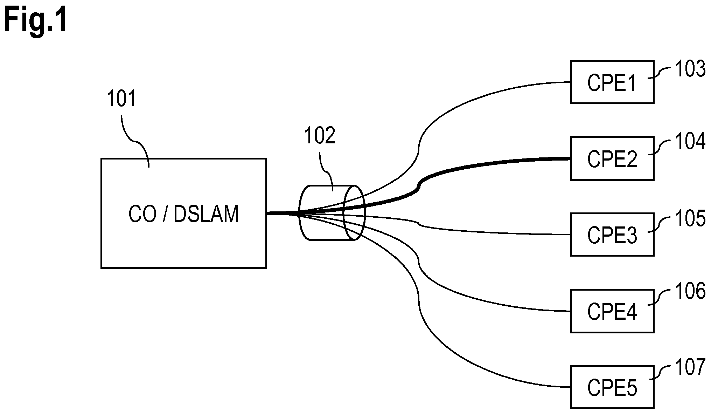

- Fig.1: shows a diagram comprising a CO and/or a DSLAM that is connected via a cable binder to several CPEs.

The approach provided herein in particular changes a Signal-to-Noise Ratio (SNR) condition for a Customer Premises Equipment (CPE). Advantageously, this can be done without any necessity of adding noise to a line.

The SNR condition for a CPE can be modified by changing a transmit signal level.

According to the fact that SNR is based on a receive signal level (S) related to the noise (N) level, increasing the noise level (N) or reducing the transmit signal level (decreasing transmit signal and as result decreasing receive signal S level) both influence the SNR in the same direction.

Advantageously, the CPE may perform standard SNR estimation by calculation of a received SNR. The actual transmit power cannot be measured by the CPE. Instead, it may be reported during a training phase or an overhead channel may be provided and a Digital Subscriber Line Access Multiplexer (DSLAM) or a Central Office (CO) may inform the CPE about the actual transmit level via such overhead channel.

Thus, if the DSLAM or CO conveys signals towards the CPE at a lower transmit power at particular frequencies without informing the CPE about such reduced transmission power, the SNR calculation at the CPE is based on the reduced (not nominal or reported) transmit power and the resulting SNR can be compared to a SNR as if it were based on real noise generated and conveyed over the line. However, the real-time constraints for the approach reducing the transmit power at the DSLAM or CO and not informing the CPE are significantly lower than in the scenario of adding noise to the line.

It is noted that the CPE may be informed of the reduced transmission power by the DSLAM or the CO, but it may be also be informed about or decide to discard this information and in particular to adjust to the signal conveyed by the DSLAM as if it were not a signal of reduced power. Hence, the CPE may deliberately utilize such signal of reduced power to implement a safety-margin in particular during training or startup.

Fig.1 shows a diagram comprising a CO and/or DSLAM 101 that is connected via a cable binder 102 to several CPEs 103 to 107.

As an example, during a training phase of CPE2 104, CO/DSLAM 101 reduces the transmitting power of data to be conveyed towards CPE2 104. Such data is preferably conveyed via digital multi-tone modulation utilizing at least one frequency or at least one band. The CPE2 104 adjusts to this signal of reduced transmission power. In case adjacent lines convey normal traffic, CPE2 104 adjusts its (highest) possible data rate according to the inference resulting from adjacent lines based on the reduced transmission power provided by the CO/DSLAM 101.

Thus, during training the CPE2 104 maintains a safety margin due to the reduced transmission power set forth by the CO/DSLAM 101 to cope with a higher degree of interference during showtime (compared to the interference that occurred during the training phase). For example, the approach allows the CPE during training to adjust to a data rate that it can maintain even in situations of higher interference. Advantageously, the error rate can be significantly reduced during such situation of high interference and re-training can efficiently be avoided.

### List of Abbreviations:

- CO: Central Office
- CPE: Customer Premises Equipment
- DMT: Discrete Multi-Tone
- DSL: Digital Subscriber Line
- DSLAM: DSL Access Multiplexer
- IFT: Inverse Fourier Transform
- OFDM: Orthogonal Frequency Division Multiplexing
- QAM: Quadrature Amplitude Modulation
- SNR: Signal-to-Noise Ratio

## Claims

1. A method for data processing, wherein, during a training-phase of a customer premises equipment, a central office reports a transmit power to the customer premises equipment, **characterized in that** the central office conveys data towards the customer premises equipment with a reduced transmission power compared to the reported transmission power at at least one frequency, and the customer premises equipment determines a signal-to-noise ratio based on the data conveyed.

2. The method according to claim 1, wherein said customer premises equipment is informed about the reduced transmission power in particular via an overhead channel.

3. The method according to any of the preceding claims, wherein said data processing is a DMT data processing via at least one digital subscriber line.

4. The method according to any of the preceding claims, wherein the first network element is or is associated with a Digital Subscriber Line Access Multiplexer.

5. The method according to any of the preceding claims, wherein the customer premises equipment is or is associated with a digital subscriber line modem.

6. The method according to any of the preceding claims, wherein the central office adds noise to data to be conveyed for at least one frequency.

7. The method according to any of the preceding claims, wherein the data is conveyed towards the customer premises equipment during a startup-phase of the customer premises equipment.

8. The method according to claim 7, wherein the central office coordinates several startup-phases and/or training-phases with several customer premises equipments.

9. A communication system comprising means for executing all steps of the method according to any of the preceding claims.

10. A device comprising means for, during a training-phase of a customer premises equipment, reporting a transmit power to the customer premises equipment and conveying data towards the customer premises equipment with a reduce transmission power compared to the reported transmission power at at least one frequency, to enable the method according to any of the claims 1 to 8.

11. The device according to claim 10, wherein said device is a central office or digital subscriber line access multiplexer.

## Patentansprüche

1. Verfahren zur Datenverarbeitung, wobei während einer Trainingsphase eines Kundenstandort-Geräts ein Vermittlungsamt eine Sendeleistung an das Kundenstandort-Gerät meldet,
**dadurch gekennzeichnet, dass**
das Vermittlungsamt Daten zu dem Kundenstandort-Gerät mit reduzierter Sendeleistung überträgt im Vergleich zu der gemeldeten Sendeleistung bei mindestens einer Frequenz und das Kundenstandort-Gerät auf der Basis der übermittelten Daten ein Signal-Rausch-Verhältnis bestimmt.

2. Verfahren nach Anspruch 1, wobei das Kundenstandort-Gerät über die reduzierte Sendeleistung insbesondere über einen Overhead-Kanal informiert wird.

3. Verfahren nach einem der vorhergehenden Ansprüche, wobei die Datenverarbeitung eine DMT-Datenverarbeitung über mindestens eine digitale Anschlussleitung ist.

4. Verfahren nach einem der vorhergehenden Ansprüche, wobei das erste Netzwerkelement ein DSLAM (Digital Subscriber Line Access Multiplexer) ist oder damit assoziiert ist.

5. Verfahren nach einem der vorhergehenden Ansprüche, wobei das Kundenstandort-Gerät ein DSL(Digital Subscriber Line)-Modem ist oder damit assoziiert ist.

6. Verfahren nach einem der vorhergehenden Ansprüche, wobei das Vermittlungsamt Rauschen zu zu übermittelnden Daten für mindestens eine Frequenz hinzufügt.

7. Verfahren nach einem der vorhergehenden Ansprüche, wobei die Daten zu dem Kundenstandort-Gerät während einer Anlaufphase des Kundenstandort-Geräts übermittelt werden.

8. Verfahren nach Anspruch 7, wobei das Vermittlungsamt mehrere Anlaufphasen und/oder Trainingsphasen mit mehreren Kundenstandort-Geräten koordiniert.

9. Kommunikationssystem umfassend Mittel zum Ausführen aller Schritte des Verfahrens nach einem der vorhergehenden Ansprüche.

10. Einrichtung, umfassend Mittel zum, während einer Trainingsphase eines Kundenstandort-Geräts, Melden einer Sendeleistung an das Kundenstandort-Gerät und Übermitteln von Daten zu dem Kundenstandort-Gerät mit einer reduzierten Sendeleistung im Vergleich zu der gemeldeten Sendeleistung bei mindestens einer Frequenz, um das Verfahren nach einem der Ansprüche 1 bis 8 zu ermöglichen.

11. Einrichtung nach Anspruch 10, wobei die Einrichtung ein Vermittlungsamt oder ein DSLAM ist.

## Revendications

1. Procédé de traitement de données, selon lequel, au cours d'une phase de conditionnement d'un équipement local d'abonné, un central téléphonique signale une puissance d'émission à l'équipement local d'abonné,
**caractérisé en ce que**
le central téléphonique achemine des données en direction de l'équipement local d'abonné avec une puissance d'émission réduite par rapport à la puissance d'émission signalée à au moins une fréquence, et l'équipement local d'abonné détermine un rapport signal/bruit en fonction des données acheminées.

2. Procédé selon la revendication 1, dans lequel ledit équipement local d'abonné est informé de la puissance d'émission réduite plus particulièrement par le biais d'un canal de surdébit.

3. Procédé selon l'une quelconque des revendications précédentes, dans lequel ledit traitement de données est un traitement de données DMT par le biais d'au moins une ligne d'abonné numérique.

4. Procédé selon l'une quelconque des revendications précédentes, dans lequel le premier élément de réseau prend la forme d'un multiplexeur d'accès pour lignes d'abonnés numériques ou est associé à un tel multiplexeur d'accès pour lignes d'abonnés numériques.

5. Procédé selon l'une quelconque des revendications précédentes, dans lequel l'équipement local d'abonné est un modem de ligne d'abonné numérique.

6. Procédé selon l'une quelconque des revendications précédentes, dans lequel le central téléphonique ajoute du bruit à des données appelées à être acheminées pour au moins une fréquence.

7. Procédé selon l'une quelconque des revendications précédentes, dans lequel les données sont acheminées en direction de l'équipement local d'abonné au cours d'une phase de démarrage de l'équipement local d'abonné.

8. Procédé selon la revendication 7, dans lequel le central téléphonique coordonne plusieurs phases de démarrage et/ou phases de conditionnement entre plusieurs équipements locaux d'abonnés.

9. Système de communication comprenant des moyens pour exécuter toutes les étapes du procédé selon l'une quelconque des revendications précédentes.

10. Dispositif comprenant des moyens pour, au cours d'une phase de conditionnement d'un équipement local d'abonné, signaler une puissance d'émission à l'équipement local d'abonné et acheminer des données en direction de l'équipement local d'abonné avec une puissance d'émission réduite par rapport à la puissance d'émission signalée à au moins une fréquence, dans le but de mettre en oeuvre le procédé selon l'une quelconque des revendications 1 à 8.

11. Dispositif selon la revendication 10, lequel dispositif est un central téléphonique ou un multiplexeur d'accès pour lignes d'abonnés numériques.
